Europäisches Patentamt

**European Patent Office**

Office européen des brevets

(11) Numéro de publication: **0 158 561 B1**

## (12) FASCICULE DE BREVET EUROPEEN

(45) Date de publication de fascicule du brevet: **09.09.92**

(21) Numéro de dépôt: **85400586.5**

(22) Date de dépôt: **26.03.85**

(51) Int. Cl.⁵: **G02B 6/42**, H01L 33/00, H01L 31/02

(54) **Connecteur d'une fibre optique et d'un photoélément, récepteur ou émetteur, et procédé de positionnement de ceux-ci.**

(30) Priorité: **29.03.84 FR 8404915**

(43) Date de publication de la demande:
**16.10.85 Bulletin 85/42**

(45) Mention de la délivrance du brevet:
**09.09.92 Bulletin 92/37**

(84) Etats contractants désignés:
**BE DE GB IT NL**

(56) Documents cités:
**EP-A- 0 016 526**
**GB-A- 2 017 963**
**US-A- 4 119 363**
**US-A- 4 394 061**

**IBM TECHNICAL DISCLOSURE BULLETIN, vol. 21, no. 4, septembre 1978, pages 1568-1570, New York, US; F.P. CEFARELLI et al.: "Optical circuit module connector"**

(73) Titulaire: **SAT Société Anonyme de Télécom-munications**
**41, rue Cantagrel**
**F-75631 Paris Cedex 13(FR)**

(72) Inventeur: **Mery, Jean-Paul**
**41, rue Cantagrel**
**F-75631 Paris Cedex 13(FR)**

(74) Mandataire: **Cabinet Martinet & Lapoux**
**BP 405**
**F-78055 Saint Ouentin en Yvelines Cédex(FR)**

EP 0 158 561 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un connecteur d'une fibre optique et d'un photoélément, récepteur ou émetteur ainsi qu'une pluralité de procédés de positionnement, dans un tel connecteur, du photo élément par rapport à la face extrême de la fibre optique. Le connecteur comprend un support sur lequel est fixé le photoélément en a lignement coaxial avec une extrémité de la fibre optique. Un tel connecteur est particulièrement destiné à constituer une interface optoélectronique à une extrémité de réception ou d'émission d'une fibre optique d'un système de transmission par fibre optique.

Pour une extrémité d'emission, comme décrit dans le US-A-4394061, le photoélément est un photoemetteur LED comprenant une diode sous la forme d'une pastille semi-conductrice enrobée dans un petit boîtier hermétique fixé sur le support afin de protéger la diode par rapport à l'air. Le boîtier hermétique comporte des traversées hermétiques à travers lesquelles passent des connexions électriques formant des bornes de la diode et une fibre optique de couplage ayant une petite longueur. Le positionnement entre une face extrême de la fibre de couplage et une face photosensible de la photodiode requiert une précision de l'ordre du micron et est réalisé dans le boîtier hermétique, lors de sa fabrication, : l'extremité de la fibre et la diode LED sont noyées dans de la résine durcissable injectée dans le boîtier lorsque la puissance lumineuse recue par la fibre suite à un signal électrique appliqué à la diode est maximale. Le raccordement de l'autre extrémité de la fibre de couplage à une extrémité de la fibre optique du système de transmission est obtenu au moyen d'un connecteur connu pour deux fibres optiques, ou par soudure fibre à fibre.

Un tel connecteur présente essentiellement deux inconvénients :

- le couplage de la fibre de couplage intermédiaire entre la pbotodiode et la fibre à connecter nécessite un conduit hermétique à travers une paroi du boîtier dont la réalisation est très délicate, et
- le couplage de la fibre du système de transmission à la photodiode nécessite une fibre optique de couplage et donc au moins un connecteur à fibres optiques qui augmente les pertes par insertion dans le système de transmission et le coût du raccordement de la libre du système au photoémetteur.

Plus particulièrement, l'invention concerne un connecteur d'une fibre optique et d'un photoélément tel que défini dans le préambule de la revendication 1, et du type décrit dans l'article de "IBM Technical Disclosure Bulletin ", Vol.21, N° 4, sept.78, pages 1568-1570.

Selon cet article, le photoélément, pastille de diode LED ou photodiode, est intégré à un petit support rectangulaire fixé sur des connexions électriques superficielles, formant électrodes du photoélément, d'une face de l'embase. L'élément femelle comporte une cavité encadrant le photoélément et le support est collé hermétiquement sur l'embase. La fixation du support sur l'embase est effective lorsque l'élément femelle est également fixée à l'embase, et est simultané à l'alignement du photoélément avec un conduit recevant l'élément mâle à fibre optique. Cet alignement est obtenu manuellement un moyen d'un outil de centrage traversant le conduit et pénétrant dans un puits ménagé dans la face du photoélément.

Un tel connecteur ne permet pas un alignement précis du photoélément et de la fibre au moyen d'un micromanipulateur, comme décrit dans le US-A-4394061, et un retrait du photoélément indépendamment de la désolidarisation de l'élément femelle par rapport à l'embase.

La présente invention vise à fournir un connecteur de fibre optique et photoélément remédiant aux inconvénients des connecteurs précités, tout en garantissant une étanchéité de l'élément photoémetteur ou photorécepteur, un ajustage par micromanipulateur de l'alignement du photoélément et de la libre optique, et un retrait du support de photoélément par rapport à l'embase indépendamment de la liaison de l'élément femelle recevant la fibre optique à l'embase.

A cette fin, un connecteur est tel que défini dans la revendication 1.

Les problèmes d'étanchéité du photoélément sont ainsi résolus grâce au corps creux hermétique, sensiblement analogue à celui décrit dans la GB-A-2017963 concernant un connecteur dans lequel le corps de photoélément est positionné en butée dans un élément femelle de raccord-union sans aucune possibilité de réglage d'alignement avec la fibre optique.

Le support selon l'invention est suffisamment grand pour être saisi aisément par un micromanipulateur et être déplacé au-dessous de la rainure de l'embase dans l'espace à trois dimensions, et également pour supporter des composants électro-niques traitant le signal électrique et assurant la polarisation du photoélément. Cet avantage permet d'offrir un ensemble compact préservant à la fois les connexions électriques et optiques et les traitements de signaux électriques contre toute perturbation d'origine électrique ou thermique.

L'accouplement de l'élément femelle et de l'élément mâle forme, de préférence, la moitié d'un raccord-union connu pour extrémités de fibres optiques. L'élément mâle constitue ainsi une interface optique aisément démontable et remontable permettant d'interchanger la fibre optique. La face extrême de la fibre est toujours à une position prédéterminée le long de l'axe de référence, obtenue par exemple par arasage de l'extrémité de la fibre coplanairement à une face de référence de l'élément mâle, ce qui après un nouvel accouplement des éléments mâle et femelle ne modifie pas les positions relatives de la face extrême de la fibre et de la face photosensible ou photorayonnante du photoélément.

Selon une autre caractéristique de l'invention, le photoélément est soudé au support par deux points de soudure formant deux bornes de l'élément photorécepteur ou photoémetteur. Aucune fibre ne pénètre dans le boîtier hermétique, ce qui évite les problèmes d'étanchéité évoqués précédemment su niveau de le traversée de fibre .

Selon d'autres aspects de l'invention, le support supportant le photoélément et d'autres supports parallèles à celui-ci fixés à l'embase sont des cartes imprimées et/ou à multicouche sur lesquelles sont implantés des composants électroniques discrets et/ou intégrés destinés à traiter, notamment amplifier et corriger, le signal électrique récupéré par le photorécepteur ou appliqué au photoémetteur. Les supports sont de préférence enfermés dans un capot fixé à l'embase pour former un boîtier compact. Ces dispositions permettent de réduire le coût de fabrication, le volume du matériel et les longueurs de connexions électriques des moyens de traitement du signal électrique en sortie du photorécepteur ou en entrée du photoémetteur. Le connecteur compact selon l'invention présente ainsi un côté recevant d'une manière démontable l'élément mâle contenant l'extrémité de la fibre optique, et un autre côté formé par des broches de connexion électrique saillant du ou des supports et enfichables par exemple dans une barrette de connexion connue desservant d'autres moyens de traitement et de transmission du signal électrique.

Le positionnement relatif du photoélément et de l'extrémité de la fibre optique dans un connecteur selon l'invention peut être réalisé selon deux procédés pour fixer définitivement le photoélément dans le connecteur de manière que lorsque le photoélément est un photorécepteur, il récupère un maximum de puissance émanant d'un signal optique rayonné par la face extrême de la libre optique, ou lorsque le photoélément est un photoémetteur, il transmette un maximum de puissance vers la face extrême de la fibre optique, suite à l'application d'un signal électrique aux bornes du photoélément.

Les differents procédés de positionnement sont tels que définis dans les revendications 13-16.

D'autres caractéristiques et avantages de la présente invention apparaîtront plus clairement à la lecture de la description suivante de plusieurs réalisations préférées de l'invention en référence aux dessins annexés correspondants dans lesquels :

- la Fig. 1 est une vue de côté longitudinal d'un connecteur sans capot selon une première réalisation ;
- la Fig. 2 est une vue de dessus du connecteur sans capot selon la première réalisation ;
- la Fig. 3 est une vue arrière du connecteur avec capot et face arrière du capot omise, selon la première réalisation ;
- la Fig. 4 est une vue en coupe longitudinale prise le long de la ligne brisée IV-IV de la Fig. 5 d'un connecteur à trois cartes imprimées parallèles et à deux demi-capots selon une seconde réalisation ;
- les Figs. 5, 6 et 7 sont une vue de dessus au niveau d'une carte supportant un photorécepteur, une vue de dessous au niveau d'une carte inférieure et une demi-vue de dessus au niveau d'une carte supérieure du connecteur selon la seconde réalisation, respectivement ;
- les Figs. 8 et 9 sont des vues arrière du connecteur selon la seconde réalisation, avec et sans plaquette arrière isolante traversée par des broches de connexion électrique, respectivement ;
- les Figs. 10 et 11 sont des vues avant du connecteur sans et avec élément femelle selon la seconde réalisation, respectivement ;
- la Fig. 12 est une vue de côté longitudinal du connecteur selon la seconde réalisation ; et
- la Fig. 13 est une vue longitudinale en coupe montrant en détail la position du photorécepteur dans le connecteur selon la seconde réalisation.

Les réalisations décrites ci-après se rapportent à un connecteur d'une fibre optique et d'un photorécepteur.

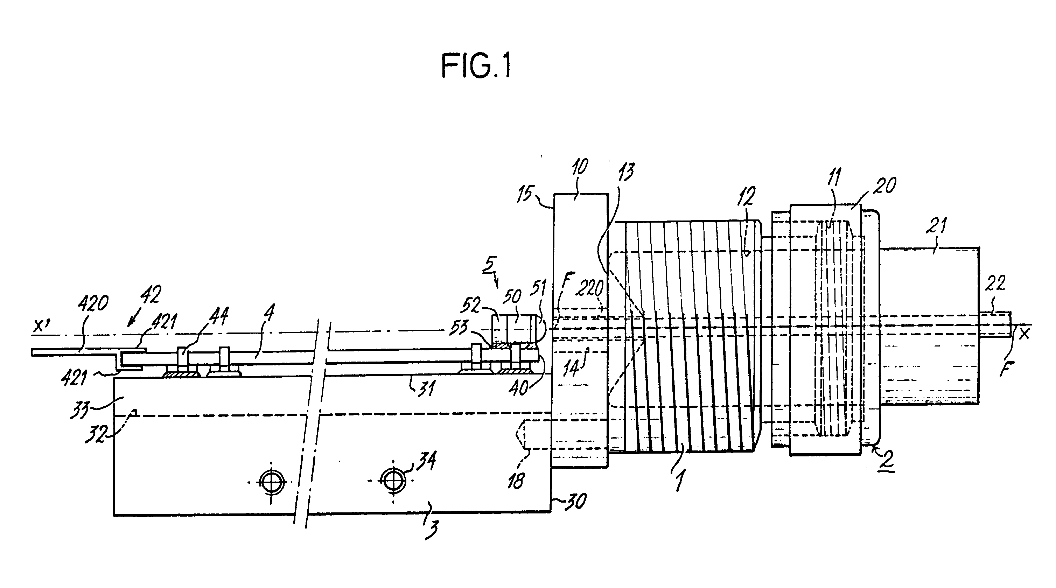

Comme montré aux Figs. 1 à 3, un connecteur selon l'invention comprend en partie avant, la moitié d'un raccord-union connu à prise rapide pour extrémités de deux fibres optiques, constituée par un élément femelle cylindrique 1 et un élément mâle cylindrique 2, et en partie arrière, une embase de forme générale parallélépipédique 3 recevant un support isolant plan tel qu'une petite carte rectangulaire de circuit imprimé 4. La carte 4 supporte un photorécepteur 5 en arrière de l'élément femelle 1.

L'élément femelle 1 a une forme générale cylindrique coaxiale à un axe de référence X'X définissant la direction d'alignement du photorécepteur 5 et d'une fibre optique F maintenue axialement dans l'élément mâle 2. L'élément femelle 1 possède un collet arrière 10 auquel est soudé et/ou fixé par vis et trous taraudés 18, un chant transversal avant 30 de l'embase 3 de telle sorte qu'une grande face dite de dessus 31 de l'embase soit précisément parallèle à l'axe X'X et en-dessous de l'axe X'X, comme montré à la Fig. 1. En partie avant, l'élément 1 a un filetage 11 autour duquel est vissé un écrou moleté central 20 de l'élément mâle 2. L'écrou 20 est monté à rotation libre entre deux collerettes d'un cylindre creux 21 de l'élément 2. Coaxialement à l'intérieur du cylindre 21 est soudée une petite tige creuse 22 traversant entièrement le cylindre 21. Selon une autre variante, la tige 22 est montée à coulissement entre deux retenues dans le cylindre 21 et rappelée par ressort vers l'arrière. Une extrémité de la fibre optique F est enfilée dans la tige 22 et y est maintenue par collage. Une face extrême de la fibre F est arasée à une extrémité arrière 220 de la tige 22 saillant du cylindre 21. Le raccord rapide est obtenu en emmanchant un tronçon avant du cylindre 21 dans un alésage 12 à fond arrière 13 de l'élément femelle 1 et en vissant à fond l'écrou moleté 20 autour du filetage 11. L'extrémité arrière 220 de la tige 22 pénètre librement dans un petit alésage 14 du collet 20 jusqu'à ce que la face extrême de la fibre F soit sensiblement coplanaire à une face arrière 15 du collet 10 soudée et/ou fixée par vis en partie basse à l'embase 3. La fibre F est ainsi maintenue fermement, coaxialement à l'axe X'X.

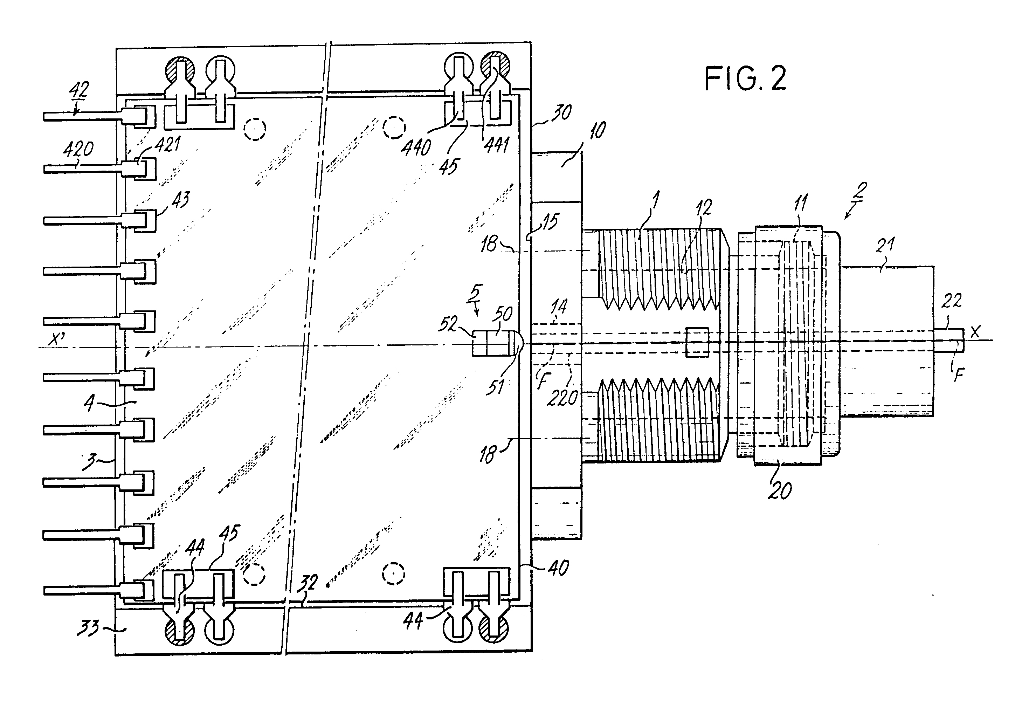

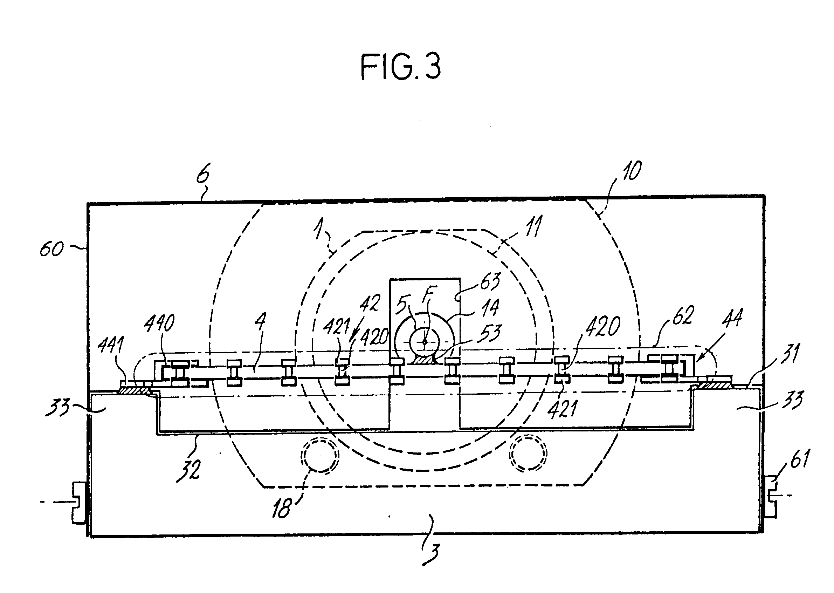

Une grande face de dessus de la carte 4 supporte le photorécepteur 5 au niveau d'un bord 40 devant la face 15 du collet 10, ainsi que des composants électroniques discrets et/ou intégrés, non représentés, formant un circuit hybride. Le circuit hybride a pour fonctions notamment de polariser le photorécepteur et de préamplifier un signal électrique obtenu par conversion optique-électrique d'un signal optique transmis par la fibre F dans le photorécepteur. Le photorécepteur 5 se présente sous la forme d'un petit boîtier hermétique comprenant un corps tubulaire creux tel qu'un fourreau 50 ayant une forme générale cylindrique. Une collerette avant du fourreau est fermée hermétiquement par une fenêtre discoïde plane transparente en verre ou par une lentille de focalisation biconvexe 51 offrant un épaulement plat. Une embase est soudée à l'arrière du fourreau 50 et supporte sur une face avant à l'intérieur du fourreau un élément photorécepteur 52, tel qu'une photodiode à avalanche, coaxial à l'axe optique de la lentille. La distance entre la face photosensible du récepteur 52 et le centre de la fenêtre ou lentille 51, ainsi que les caractéristiques optiques et géométriques de la lentille sont particulièrement bien adaptées de manière que le récepteur soit susceptible de recevoir une puissance optique maximale d'un signal lumineux sortant d'une extrémité d'une fibre optique, telle que la fibre F, placée à quelques centièmes de millimètre devant la lentille 51. Comme montré dans les Figs. 2 et 3, le boîtier du photorécepteur 5 est fixé rigidement au-dessus d'un axe longitudinal de la carte par deux points de soudure 53 au niveau de l'embase arrière supportant l'élément photorécepteur et de la collerette avant. Les points de soudure 53 constituent deux bornes de l'élément photorécepteur.

La carte 4 est positionnée visuellement au-dessus d'une rainure large longitudinale 32 pratiquée dans la face de dessus de l'embase 3 afin que le photorécepteur 5 soit sensiblement coaxial à l'axe X'X et que la lentille 51 soit à quelques centièmes de millimètre de la face extrême de la fibre optique F. Le positionnement visuel est obtenu au moyen d'un micromanipulateur enserrant l'arrière de la carte 4 au-dessus de la rainure 32 et pouvant déplacer la carte dans l'espace à trois dimensions. L'embase 3 est fixée sur une table de référence du micromanipulateur.

Le positionnement est parfait par un ajustage dynamique consistant à injecter un signal optique à une autre extrémité de la fibre F et à déplacer la carte 4 au micromanipulateur afin d'obtenir un signal électrique ayant une puissance maximale en sortie du circuit hybride de préamplification. La connexion électrique de la carte 4 à un appareil de mesure et ultérieurment au reste des moyens de traitement du signal électrique est effectuée par l'intermédiaire de broches plates 42 ayant des queues saillantes 420 à l'arrière de la carte 4 et des paires de branches superposées 421 pinçant des plages métallisées double face 43 de la carte. Les branches supérieures 421 sont soudées sur la carte. La position correspondant à la puissance maximale reçue est ensuite conservée en fixant rigidement la carte 4 à l'embase 3, à l'aide d'attaches mécaniques telles que des petits étriers de fixation 44. Comme montré aux Figs. 2 et 3, deux paires d'étriers 44 sont prévues aux quatre coins de la carte et des bords longitudinaux 33 de l'embase 3. Chaque étrier 44 possède deux branches plates superposées 440 et une queue plate 441. Les branches 440 pincent une plage métallisée double face 45 de la carte 4, les branches supérieure et inférieure étant soudées à la carte. Ensuite, les queues 441 des étriers sont de préférence collées sur les bords correspondants 33 de la rainure 32 afin de permettre, le cas échéant, un positionnement de la carte pendant la prise de la colle. Puis, les liaisons entre les queues 441 et les bords 33 sont consolidées par soudure. La carte 4 est ainsi fixée à demeure au-dessus de la rainure 32 de l'embase et en-dessous de l'axe X'X avec un positionnement optimum du photorécepteur 5.

L'embase 3 supportant rigidement la carte 4 est coiffée d'un capot métallique parallélépipédique 6 ayant des côtés longitudinaux 60 fixés par vis 61 dans des trous taraudés transversaux 34 de l'embase, comme montré à la Fig. 3. Les queues 420 des broches de connexion électrique 42 traversent une lumière transversale 62 ménagée dans le côté arrière du capot 6, représentée en trait fin mixte dans la Fig. 3. Un côté avant du capot 6 est plaqué contre la face 15 du collet 10 et possède une saignée centrale 63 au-dessus d'un interstice entre la lentille 51 et la face extrême de la fibre F. Un chant inférieur du côté avant du capot est profilé comme le côté avant 30 de l'embase.

La fibre F qui a servi au positionnement du photorécepteur 5 et de la carte 4, est ensuite retirée de l'élément mâle 2 du raccord pour être remplacée par l'extrémité d'une fibre optique d'un système de transmission par fibre optique. Par exemple, la fibre optique nouvellement introduite est issue d'un câble de fibres optiques desservant un équipement terminal, tel qu'une tête de câble optique d'un répartiteur dans un central téléphonique. Le connecteur selon l'invention réalise ainsi une interface optoélectronique compacte présentant une entrée formée par l'élément femelle 1 auquel est accouplé d'une manière démontable un élément mâle 2 contenant l'extrémité d'une fibre optique, et une sortie formée par la rangée des queues 420 de broches 42 qui sont enfichées dans une barrette de connexion électrique, également démontable, qui transmet notamment le signal électrique récupéré par le photorécepteur 5.

Selon une autre variante, le circuit hybride de polarisation et de préamplification est constitué de microboîtiers ou de pastilles nues de composants électroniques implantés sur la carte 3 et est recouvert d'un petit capot métallique directement scellé sur la grande face de dessus de la carte. Le photodétecteur 5 est situé à l'extérieur du petit capot et est relié au circuit hybride à travers des couches sérigraphiques dans la carte 3 du genre multicouche par dessus de laquelle le petit capot est scellé hermétiquement. Tout ou partie du circuit hybride peut être remplacé par un circuit intégré assurant les fonctions de polarisation, de préamplification, de contrôle automatique de gain, d'amplification de puissance et autres fonctions de correction se trouvant normalement à la sortie d'un circuit classique de réception d'un signal optique.

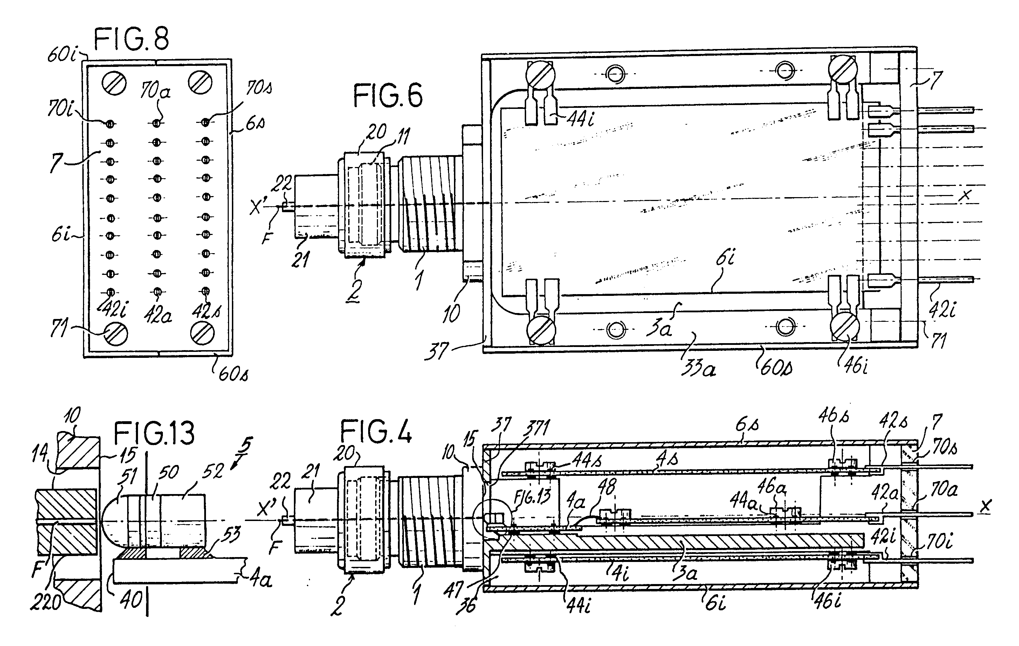

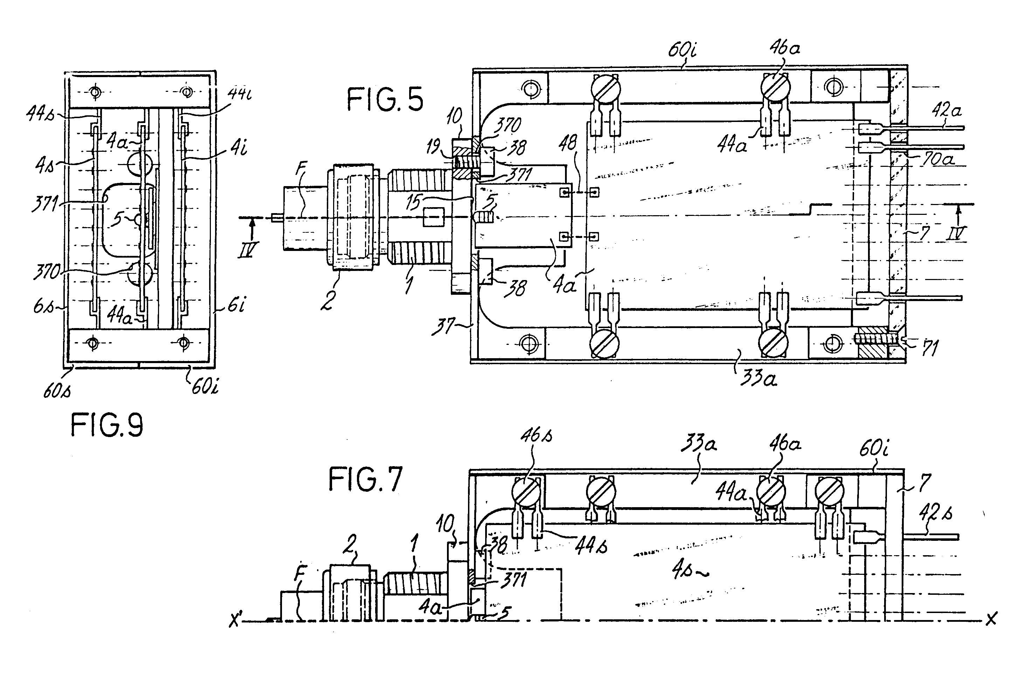

Selon une seconde réalisation montrée aux Figs. 4 à 13 une embase 3a d'un connecteur selon l'invention supporte plusieurs cartes imprimées parallèles superposées, par exemple au nombre de trois, 4a, 4i et 4s. Comme montré particulièrement à la Fig. 4, une carte inférieure 4i est logée dans une cavité 36 sous-jacente à l'embase 3a, et une carte supérieure 4s est logée au-dessus d'une carte intermédiaire 4a supportant le photorécepteur 5. Des coins de chacune des cartes 4a, 4i et 4s sont fixés à des bords longitudinaux 33a de l'embase 3a par des étriers 44a, 44i et 44s, analogues aux étriers 44, ayant des extrémités pinçant des bords longitudinaux des cartes et soudées à des plages métallisées de ceux-ci et d'autres extrémités appliquées sur les bords de l'embase par des vis 46a, 46i et 46s, respectivement. Les cartes 4a, 4i et 4s peuvent être des cartes imprimées et/ou à multicouche et supportent des composants électroniques discrets et/ou intégrés propres au traitement du signal électrique récupéré par le photorécepteur 5. Selon la seconde réalisation illustrée, la carte centrale 4a est en fait composée d'une petite carte imprimée avant supportant le photorécepteur 5 et collée par l'intermédiaire de pattes soudées et d'épaulements 47 sur l'embase, et d'une plus grande carte imprimée supportant des composants électroniques et reliée par deux straps 48 aux bornes 53 du photorécepteur. Des chants arrière des cartes 4a, 4i et 4s comportent des broches de connexion électrique respectives 42a, 42i et 42s, analogues aux broches 42, alignées suivant trois rangées transversales et traversant des trous 70a, 70i et 70s d'un flasque arrière, tel qu'une plaquette isolante électrique 7, fixé par vis 71 contre des montants arrière de l'embase 3a, comme montré aux Figs. 5 et 8.

Selon la seconde réalisation illustrée, l'embase 3a comporte un côté avant rectangulaire 37 qui est orthogonal à l'axe de référence X'X et qui a des dimensions identiques à celles de la plaquette isolante 7. La face 15 du collet 10 de l'élément femelle 1 est fixée contre le côté 37 par deux vis longitudinales 38 parallèles à l'axe X'X, comme montré à la Fig. 5. Les vis 38 sont introduites par le dessus de l'embase 3a au niveau de la carte 4a, traversent librement des trous lisses 370 dans le côté 37 et sont vissées dans des trous taraudés 19 du collet 10. Le diamètre des trous lisses de passage 370 est plus grand que le diamètre des trous 19 et des vis 38 en vue du positionnement de la fibre optique F par rapport au photorécepteur 5 comme décrit ci-dessous, et non du photorécepteur 5 par rapport à la fibre F selon la première réalisation illustrée.

La carte 4a est positionnée visuellement au micromanipulateur afin que le photorécepteur 5 soit approximativement coaxial à l'axe X'X et la face avant 51 du photorécepteur 5, formée par une lentille ou une fenêtre, vienne buter contre un calibre transversal appliqué contre le côté avant 37 de l'embase 3e et pénétrant partiellement dans un orifice large 371 de celui-ci. L'épaisseur du calibre est déterminée en fonction de la distance entre la face extrême de la fibre et la face 51 du photorécepteur. Puis à cette position, la carte 4a est fixée sur l'embase par les attaches mécaniques 44a-46a, ou selon la réalisation illustrée, la petite carte avant supportant le photorécepteur est collée et/ou soudée sur l'embase 3a par l'intermédiaire des épaulements transversaux 47. Le calibre est ôté. L'élément femelle 1 est accouplé à l'élément mâle 2 muni de la fibre optique F et est ensuite saisi par le micromanipulateur pour que le collet 10 soit appliqué contre le côté avant 37 de l'embase 3a et que la face extrême de la fibre optique F soit à quelques centièmes de millimètre de la face avant 51 du photorécepteur 5. Puis, la position de l'élément 1 est ensuite parfaite suivant deux directions transversales orthogonales à l'axe X'X par ajustage dynamique comme selon la première réalisation. Lorsque la puissance mesurée du signal électrique sortant du photorécepteur 5 est maximale, l'élément femelle 1 et la face extrême de la fibre F sont maintenus à cette position optimale au moyen des deux vis 38 introduites librement dans les trous larges 370 du côté avant 37 de l'embase et vissées dans les trous taraudés 19 du collet 10, les vis 38 plaquant le collet 10 contre le côté avant 37 de l'embase. Le positionnement optimum peut être maintenu encore plus solidement en soudant le collet 10 et le côté 37.

Selon une autre variante, les trous lisses 370 sont remplacés par des trous taraudés ayant un diamètre plus petit, les trous taraudés 19 sont remplacés par des trous lisses ayant un diamètre plus grand, et les vis 38 sont introduites par l'extérieur, du côté de la face avant du collet 10.

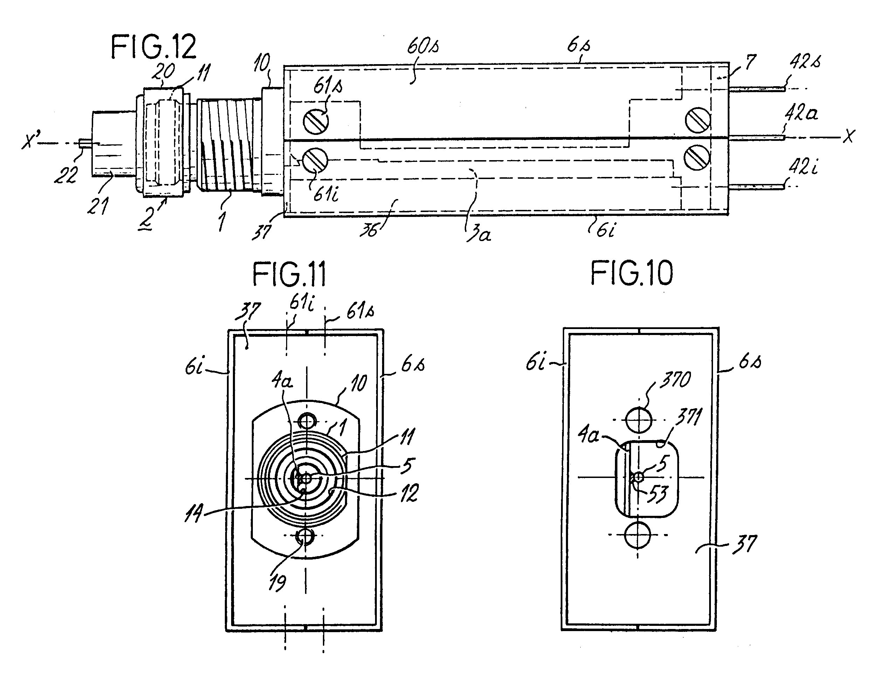

Puis l'embase 3a est recouverte d'un capot métallique formé ici par un demi-capot inférieur 6i et un demi-capot supérieur 6s, comme montré à la Fig. 12. Des côtés longitudinaux 60i et 60s des demi-capots 6i et 6s sont fixés à l'embase 3a par des vis 61i et 61s et sont jointifs longitudinalement au niveau de la carte 4a. Des bords latéraux en U des demi-capots 6i et 6s sont appliqués sur les pourtours rectangulaires du côté avant 37 de l'embase 3a et du flasque isolant arrière 7, comme montré aux Figs. 8, 10 et 11.

Comme déjà dit les différentes réalisations décrites ci-dessus peuvent être utilisées pour constituer un connecteur d'une fibre optique et d'un photoémetteur. Le photorécepteur 52 est remplacé par un photoémetteur tel qu'une diode laser ou une diode électroluminescente, enfermé dans un petit boîtier ayant des dimensions analogues au boîtier 50-51-52. Le circuit hydride est alors destiné notamment à polariser le photoémetteur et à amplifier un signal électrique converti en un signal optique transmis par la fibre optique. En ce qui concerne le positionnement relatif du photoémetteur par rapport à la face extrême de la fibre, l'ajustage dynamique consiste à appliquer un signal électrique aux bornes 53 du photoémetteur et à obtenir une puissance optique maximale après traversée de la fibre optique.

**Revendications**

1. Connecteur d'une fibre optique (F) et d'un photoélément (5) comprenant un support plan (4) sur lequel est fixé le photoélément (5) le long d'un axe de référence (X'X) coaxial à une extrémité de la fibre optique (F), une embase (3) ayant une grande face (31) sur laquelle est fixé le support (4), un élément femelle (1) coaxial à l'axe de référence (X'X), devant le photoélément (5) et solidaire de l'embase (3), et un élément mâle (2) traversé par l'extrémité de la fibre optique (F) et accouplé mécaniquement d'une manière amovible à l'élément femelle (1) afin qu'une face extrême de la fibre soit en regard d'une face du photodétecteur (5) le long de l'axe de référence (X'X), caractérisé en ce que
le photoélément (5) comporte un corps creux (50) ayant une face fermée hermétiquement par une fenêtre transparente ou une lentille (51) en regard de la face extrême de la fibre optique (F), et une autre face supportant un élément photorécepteur ou photoémetteur (52),
et en ce que soit le support plan (4) est unique, ledit support étant suspendu au-dessus d'une rainure (32) pratiquée dans ladite grande face de l'embase (3), en étant fixé de manière amovible par des attaches mécaniques (44) à des bords (33) de la rainure, et en étant démontable de l'embase indépendamment de la fixation de l'élément femelle (1) à l'embase,
soit le support (4a) est composé de deux parties planes adjacentes, reliées électriquement, respectivement une première partie qui supporte ledit photoélément (5) et qui est fixée directement sur l'embase (3a), et une seconde partie, ladite seconde partie étant suspendue au-dessus d'une rainure pratiquée dans ladite grande face de l'embase (3a) en étant fixée de manière amovible par des attaches mécaniques (44a) à des bords (33a) de la rainure, et en étant démontable de l'embase indépendamment de la fixation de l'élément femelle (1) à l'embase.

2. Connecteur conforme à la revendication 1, caractérisé en ce que l'élément femelle (1) et l'élément mâle (2) forment la moitié d'un raccord-union connu pour extrémités de fibres optiques.

3. Connecteur conforme à la revendication 1 ou 2, caractérisé en ce que ledit corps creux (50) est soudé au support (4) par deux points de soudure (53) formant deux bornes de l'élément photorécepteur ou photoématteur (52).

4. Connecteur conforme à l'une quelconque des revendications 1 à 3, caractérisé en ce que il les attaches mécaniques (44) ont des extrémités (440) pinçant des bords du support (4) et, le cas échéant, soudée à des plages métallisées (45) du support (4), et des autres extrémités (441) soudées et/ou collées et/ou fixées par vis (46a) sur lesdits bords (33) de la rainure (32) de l'embase (3).

5. Connecteur conforme à l'une quelconque des revendications 1 à 4, caractérisé en ce qu'un bord du support (4) à l'opposé du photoélément (5) et de l'élément femelle (1) comporte des broches de connexion électrique (42) ayant des extrémités (421) pinçant des plages métallisées (43) sur ledit bord, de préférence soudées à celles-ci (43), et des autres extrémités (420) saillant dudit bord du support (4).

6. Connecteur conforme aux revendications 4 et 5, caractérisé en ce qu'il comprend plusieurs supports parallèles (4a, 4i, 4s) du genre cartes imprimées et/ou à multicouche, supportant des composants électroniques discrets et/ou intégrés, fixés par des connecteurs mécaniques (44a, 44i, 44s) à l'embase (3a) et comportant des broches de connexion électrique (42a, 42i, 42s).

7. Connecteur conforme à l'une quelconque des revendications 1 à 6, caractérisé en ce que des composants électroniques supportés par un support (4 ; 4a ; 4i ; 4s) sont coiffés d'un capot fixé hermétiquement sur le support.

8. Connecteur conforme à l'une quelconque des revendications 1 à 7, caractérisé en ce qu'il comprend un capot (6 ; 6s) coiffant une grande face de l'embase (3 ; 3a) par dessus au moins le support (4, 4a) supportant le photoélément (5), fixé à l'embase (3 ; 3a) de préférence par vis (61, 61s), et de préférence jointif avec une face (15) de l'élément femelle (1) en regard du photoélément (5).

9. Connecteur conforme aux revendications 6 et 8, caractérisé en ce qu'il comprend un second capot (4i) coiffant une autre grande face de l'embase (3a) par dessous au moins l'un desdits supports parallèles (4i), fixé à l'embase (3a) de préférence par vis (61i), et de préférence jointif avec une face (15) de l'élément femelle (1) en regard du photoélément (5).

10. Connecteur conforme à la revendication 5 ou 6 et à l'une quelconque des revendications 7 à 9, caractérisé en ce que lesdites autres extrémités (420) desdites broches (42 ; 42a, 42i, 42s) traversent librement une ou plusieurs lumières du ou des capots (6 ; 6i, 6s).

11. Connecteur conforme à la revendication 5 ou 6 et à l'une quelconque des revendications 7 à 9, caractérisé en ce que lesdites broches (42 ; 42a, 42i, 42s) traversent une plaquette isolante électrique (7) fixée à l'embase (3 ; 3a).

12. Connecteur conforme à l'une quelconque des revendications 1 à 12, caractérisé en ce que l'embase (3 ; 3a) est fixée à une face (15) de l'élément femelle (1), de préférence orthogonale à l'axe de référence (X'X), sensiblement coplanaire à la face extrême de la fibre (F), par vis (18 ; 38) et/ou par soudure.

13. Procédé de positionnement du photoélément, en tant que photorécepteur (5), par rapport à la face extrême de la fibre optique (F) dans le connecteur conforme à l'une quelconque des revendications 1 à 12 caractérisé en ce que
    a) l'élément femelle (1) est fixé coaxialement à l'axe de référence (X'X) à l'embase (3),
    b) l'élément mâle (2) contenant l'extrémité de la fibre optique (F) est accouplé à l'élément femelle,
    c) le support (4) supportant le photorécepteur (5) est positionné visuellement au-dessus de l'embase (3) au moyen d'un micromanipulateur afin que le photorécepteur (5) soit sensiblement coaxial à l'axe de référence (X'X) et à quelques centièmes de millimètre de la face extrême de la fibre optique (F),
    d) un signal optique est injecté dans la fibre optique (F) et converti par le photorécepteur en un signal électrique, et le support (4) est déplacé dans l'espace à trois dimensions au moyen du micromanipulateur jusqu'à ce que le signal électrique ait une puissance maximale correspondant à une position optimale du photorécepteur (5) et du support (4), et
    e) le support (4) à la position optimale est fixé sur l'embase (3).

14. Procédé de positionnement de la face extrême de la fibre optique (F) par rapport au photoélément, en tant que photorécepteur (5), dans le connecteur conforme à l'une quelconque des revendications 1 à 12 caractérisé en ce que
    a) le support (4a) supportant le photorécepteur (5) est positionné visuellement au-dessus de l'embase (3a) au moyen d'un micromanipulateur afin que le photorécepteur (5) soit sensiblement coaxial à l'axe de référence (X'X) et qu'une face (51) du photorécepteur (5) bute contre un calibre transversal à l'axe de référence (X'X),

b) le support (4a) est fixée sur l'embase (3a) et le calibre est ôté,

c) l'élément femelle (1) est accouplé à l'élément mâle (2) contenant l'extrémité de la fibre optique (F),

d) une face (10) de l'élément femelle (1) est appliquée contre une face (37) de l'embase (3a) orthogonale à l'axe de référence (X'X) au moyen du micromanipulateur afin que la face extrême de la fibre (F) soit à quelques centièmes de millimètre de ladite face (51) du photorécepteur (5),

e) un signal optique est injecté dans la fibre optique (F) et converti par le photorécepteur (5) en un signal électrique, et l'élément femelle (1) est déplacé orthogonalement à l'axe de référence (X'X) jusqu'à ce que le signal électrique ait une puissance maximale correspondant à une position optimale de l'élément femelle (1) et de la face extrême de la fibre optique, et

f) la face (10) de l'élément femelle (1) à la position optimale est fixée à la face (37) de l'embase (3a).

15. Procédé de positionnement du photoélément, en tant que photoémetteur (5), par rapport à la face extrême de la fibre optique (F) dans le connecteur conforme à l'une quelconque des revendication 1 à 12 caractérisé en ce que

a) l'élément femelle (1) est fixé coaxialement à l'axe de référence (X'X) à l'embase (3),

b) l'élément mâle (2) contenant l'extrémité de la fibre optique (F) est accouplé à l'élément femelle,

c) le support (4) supportant le photoémetteur (5) est positionné visuellement au-dessus de l'embase (3) au moyen d'un micromanipulateur afin que le photoémetteur (5) soit sensiblement coaxial à l'axe de référence (X'X) et à quelques centièmes de millimètres de la face extrême de la fibre optique (F),

d) un signal électrique est appliqué à des bornes du photoémetteur (5) et converti par le photoémetteur en un signal optique traversant la fibre optique (F), et le support (4) est déplacé dans l'espace à trois dimensions au moyen du micromanipulateur jusqu'à ce que le signal optique sortant de la fibre ait une puissance maximale correspondant à une position optimale du photoémetteur (5) et du support (4), et

e) le support (4) à la position optimale est fixé sur l'embase (3).

16. Procédé de positionnement de la face extrême de la fibre optique (F) par rapport au photoélément, en tant que photoémetteur (5), dans le connecteur conforme à l'une quelconque des revendications 1 à 12, caractérisé en ce que

a) le support (4a) supportant le photoémetteur (5) est positionné visuellement au-dessus de l'embase (3a) au moyen d'un micromanipulateur afin que le photoémetteur (5) soit sensiblement coaxial à l'axe de référence (X'X) et qu'une face (51) du photoémetteur (5) bute contre un calibre transversal à l'axe de référence (X'X),

b) le support (4a) est fixée sur l'embase (3a) et le calibre est ôté,

c) l'élément femelle (1) est accouplé à l'élément mâle (2) contenant l'extrémité de la fibre optique (F),

d) une face (10) de l'élément femelle (1) est appliquée contre une face (37) de l'embase (3a) orthogonale à l'axe de référence (X'X) au moyen du micromanipulateur afin que la face extrême de la fibre (F) soit à quelques centièmes de millimètre de ladite face (51) du photoémetteur (5),

e) un signal électrique est appliqué à des bornes du photoémetteur (5) et converti par le photoémetteur (5) en un signal optique traversant la fibre optique (F), et l'élément femelle (1) est déplacé orthogonalement à l'axe de référence (X'X) jusqu'à ce que le signal optique sortant de la fibre ait une puissance maximale correspondant à une position optimale de l'élément femelle (1) et de la face extrême de la fibre optique, et

f) la face (10) de l'élément femelle (1) à la position optimale est fixée à la face (37) de l'embase (3a).

17. Procédé conforme à la revendication 14 ou 16, caractérisé en ce que la fixation de la face (10) de l'élément femelle (1) à ladite face (37) de l'embase (3a) est réalisée au moyen de vis (38) traversant librement des trous lisses (370) de l'une (37) desdites faces et vissées dans les trous taraudés (19) de l'autre face (10), les trous lisses (370) ayant un diamètre plus grand que le diamètre des trous taraudés (38).

**Claims**

1. Connector for an optical fiber (F) and a photoelement (5) comprising a planar holder (4) on which the photoelement (5) is secured along a reference axis (X'X) coaxial with an end of the optical fiber (F), a base member (3) having a major surface (31) on which the holder (4) is secured, a female member (1) coaxial with the reference axis (X'X), in front of the photoelement (5) and integral with the base member (3), and a male member (2) through which the end of the optical fiber runs (F), and being removably coupled mechanically to female member (1) such that an endface of the fiber is opposite an endface of the photodetector (5) along the reference axis (X'X), characterized in that

the photoelement (5) comprises a hollow body (50) having a face hermetically sealed off by a transparent window or a lens (51) opposite the endface of the optical fiber (F), and another face carrying a photoemitter or photoreceiver member (52), and in that either the planar holder (4) is sole, said holder being suspended above a groove (32) formed in said major surface of the base member (3), by being removably secured by mechanical fasteners (44) to edges (33) of the groove, and by being detachable from the base member irrespective of the attachment of the female member (1) to the base member,

or the holder (4a) is made up of two electrically connected adjacent plane parts, respectively, a first part which supports said photoelement (5) and which is directly secured on the base member (3a), and a second part, said second part being suspended above a groove formed in said major surface of the base member (3a) by being removably secured by mechanical fasteners (44a) to edges (33a) of the groove, and by being detachable from the base member irrespective of the attachment of the female member (1) to the base member.

2. Connector according to claim 1, characterized in that the female member (1) and the male member (2) form half of a known quick engaging coupler for ends of optical fibers.

3. Connector according to claim 1 or 2, characterized in that said hollow body (50) is soldered to the holder (4) by two solder spots (53) forming two terminals of the photoemitter or photoreceiver member (52).

4. Connector according to any one of claims 1 to 3, characterized in that the mechanical fasteners (44) have ends (440) pinching edges of the holder (4) and, if requested, soldered to metal strips (45) of the holder (4), and other ends (441) soldered and/or bonded and/or secured by screws (46a) on said edges (33) of the groove (32) of the base member (3).

5. Connector according to any one of claims 1 to 4, characterized in that an edge of the holder (4) opposite the photoelement (5) and the female member (1) comprises electrical connecting pins (42) having ends (421) pinching metal strips (43) on said edge, preferably soldered to the latter (43), and other tips (420) jutting outward from said edge of the holder (4).

6. Connector according to claims 4 and 5, characterized in that it comprises several parallel holders (4a, 4i, 4s) like printed and/or multilayer circuit boards, carrying discrete and/or integrated electronic components, secured by mechanical fasteners (44a, 44i, 44s) to the base member (3a) and comprising electrical connecting pins (42a, 42i, 42s).

7. Connector according to any one of claims 1 to 6, characterized in that electronic components carried by a holder (4; 4a; 4i; 4s) are covered by an cap hermetically secured to the holder.

8. Connector according to any one of claims 1 to 7, characterized in that it comprises a cap (6; 6s) covering a major surface of the base member (3; 3a) over at least the holder (4, 4a) carrying the photoelement (5), secured to the base member (3; 3a) preferably by screws (61, 61s), and preferably joining a face (15) of the female member (1) facing the photoelement (5).

9. Connector according to claims 6 and 8, characterized in that it comprises a second cap (4i) covering another major surface of the base member (3a) under at least one of said parallel holders (4i), secured to the base member (3a) preferably by screws (61i), and preferably joining a face (15) of the female member (1) facing the photoelement (5).

10. Connector according to claim 5 or 6 and any one of claims 7 to 9, characterized in that said other end tips (420) of said pins (42; 42a, 42i, 42s) fit freely through one or more slots in the cap or the caps (6; 6i; 6s).

11. Connector according to claim 5 or 6 and to any one of claims 7 to 9, characterized in that said pins (42; 42a, 42i, 42s) fit through an electrically insulating plate (7) fixed to the base member (3; 3a).

12. Connector according to any one of claims 1 to 12, characterized in that the base member (3; 3a) is secured to a face (15) of the female member (1), preferably orthogonal to the reference axis (X'X), substantially coplanar with the endface of the fiber (F), by screws (18; 38) and/or by soldering.

**13.** Method for positioning the photoelement, as photoreceiver (5), with respect to the endface of the optical fiber (F) in the connector according to any one of claims 1 to 12, characterized in that

a) the female member (1) is disposed coaxially to the reference axis (X'X) and secured to the base member (3),

b) the male member (2) housing the end of the optical fiber (F) is coupled to the female member,

c) the holder (4) carrying the photoreceiver (5) is visually positioning over the base member (3) by means of a micromanipulator such that the photoreceiver (5) is substantially coaxial with the reference axis (X'X) and within a few hundredths of a millimeter of the endface of the optical fiber (F),

d) an optical signal is injected into the optical fiber (F) and converted by the photoreceiver into an electrical signal, and the holder (4) is moved in three-dimensional space with the micromanipulator until the electrical signal has a maximum power corresponding to an optimal position of the photoreceiver (5) and the holder (4), and

e) the holder (4) in the optimal position is secured to the base member (3).

**14.** Method for positioning the endface of the optical fiber (F) with respect to a photoelement, as photoreceiver (5), in the connector according to any one of claims 1 to 12, characterized in that

a) the holder (4a) carrying the photoreceiver (5) is visually positioned over the base member (3a) by means of a micromanipulator such that the photoreceiver (5) is substantially coaxial with the reference axis (X'X) and a face (51) of the photoreceiver (5) abuts against a gauge transversal to the reference axis (X'X),

b) the holder (4a) is secured onto the base member (3a) and the gauge is removed,

c) the female member (1) is coupled to the male member (2) housing the end of the optical fiber (F),

d) a face (10) of the female member (1) is applied against a face (37) of the base member (3a) orthogonal to the reference axis (X'X) by means of the micromanipulator such that the endface of the fiber (F) lies within a few hundredths of a millimeter of said face (51) of the photoreceiver (5),

e) an optical signal is injected into the optical fiber (F) and converted by the photoreceiver (5) into an electrical signal, and the female member (1) is moved orthogonally to the reference axis (X'X) until the electrical signal has a maximum power corresponding to an optimal position of the female member (1) and the endface of the optical fiber, and

f) the face (10) of the female member (1) in the optimal position is secured to the face (37) of the base member (3a).

**15.** Method for positioning the photoelement, as photoemitter (5), with respect to the endface of the optical fiber (F) in the connector according to any one of claims 1 to 12, characterized in that

a) the female member (1) is disposed coaxially with a reference axis (X'X) and secured to the the base member (3),

b) the male member (2) housing the end of the optical fiber (F) is coupled to the female member,

c) the holder (4) carrying the photoemitter (5) is visually positioned over the base member (3) with a micromanipulator such that the photoemitter (5) is substantially coaxial to the reference axis (X'X) and within a few hundredths of a millimeter of the endface of the optical fiber (F),

d) an electrical signal is applied to terminals of the photoemitter (5) and converted by the photoemitter into an optical signal running through the optical fiber (F), and the holder (4) is moved in three-dimensional space with the micromanipulator until the optical signal leaving from the fiber has a maximum power corresponding to an optimal position of the photoemitter (5) and the holder (4), and

e) the holder (4) in the optimal position is secured to the base member (3).

**16.** Method for positioning the endface of the optical fiber (F) with respect to the photoelement, as the photoemitter (5), in the connector according to any one of claims 1 to 12, characterized in that

a) the holder (4a) carrying the photoemitter (5) is visually positioned over the base member (3a) by means of a micromanipulator such that the photoemitter (5) is substantially coaxial with the reference axis (X'X) and a face (51) of the phototransmitter (5) abuts against a gauge transverse to the reference axis (X'X),

b) the holder (4a) is secured onto the base member (3a) and the gauge is removed,

c) the female member (1) is coupled to a male member (2) containing the end of the optical fiber (F),

d) a face (10) of the female member (1) is applied against a face (37) of the base member (3a) orthogonal to the reference axis (X'X) by means of the micromanipulator such that the endface of the fiber (F) is within a few hundredths of a millimeter of the said face (51) of the photoemitter (5),

e) an electrical signal is applied to terminals of the photoemitter (5) and converted by the photoemitter (5) into an optical signal running through the optical fiber (F), and the female member (1) is moved orthogonaly to the reference axis (X'X) until the optical signal leaving from the fiber has a maximum power corresponding to an optimal position of the female member (1) and the endface of the optical fiber, and

f) the face (10) of the female member (1) in an optimal position is secured to the face (37) of the base member (3a).

17. Method according to claim 14 or 16, characterized in that securing the face (10) of the female member (1) to said face (37) of the base member (3a) is achieved by means of screws (38) freely fitting into smooth holes (370) of one (37) of said faces and screwed into the tapped holes (19) of the other face (10), the smooth holes (370) having a greater diameter than the diameter of the tapped holes (38).

**Patentansprüche**

1. Verbindungseinrichtung für eine optische Faser (F) und ein Fotoelement (5) mit einem ebenen Träger (4), auf dem das Fotoelement (5) entlang einer Referenzachse (X'X) koaxial zu einem Endstück der optischen Faser (F) befestigt ist, mit einem Sockel (3) mit einer großen Oberfläche (31), auf der der Träger (4) befestigt ist, mit einem weiblichen Element (1), das koaxial zur Referenzachse (X'X) vor dem Fotoelement (5) und einstückig mit dem Sockel (3) angeordnet ist, und mit einem männlichen Element (2), das von dem Endstück der optischen Faser (F) durchzogen ist und lösbar mechanisch mit dem weiblichen Element (1) so verbunden ist, daß eine Stirnseite der Faser gegenüber einer Seite des Fotodetektors (5) entlang der Referenzachse (X'X) zu liegen kommt, dadurch gekennzeichnet, daß das Fotoelement (5) einen Hohlkörper (50) mit einer luftdicht durch ein transparentes Fenster oder eine Linse (51) verschlossenen Seite gegenüber der Stirnseite der optischen Faser (F) und eine zweite Seite, die einen Fotoempfänger oder Fotoemitter (52) trägt, aufweist, und dadurch, daß der ebene Träger (4) eine Einheit ist, der Träger oberhalb einer Nut (32) in der Oberfläche des Sockels (3) aufgehängt, lösbar mit mechanischen Befestigungen (44) an den Kanten (33) der Nut befestigt und vom Sockel unabhängig von der Befestigung des weiblichen Elements (1) am Sockel entnehmbar ist,

der Träger (4a) aus zwei ebenen, benachbarten Teilen, die elektrisch miteinander verbunden sind, besteht, einem ersten Teil, der das Fotoelement (5) trägt und direkt auf dem Sockel (3a) befestigt ist, und einem zweiten Teil, der oberhalb einer Nut in der Oberfläche des Sockels (3a) aufgehängt und lösbar mittels mechanischer Befestigungen (44a) an den Kanten (33a) der Nut befestigt ist, und dem Sockel unabhängig von der Befestigung des weiblichen Elements (1) an dem Sockel entnehmbar ist.

2. Verbindungsvorrichtung nach Anspruch 1, dadurch gekennzeichnet, daß das weibliche Element (1) und das männliche Element (2) die Hälfte einer bekannten Verbindungseinrichtung für Endstücke optischer Fasern bilden.

3. Verbindungsvorrichtung nach Anspruch 1 oder 2, dadurch gekennzeichnet, daß der Hohlkörper (50) an zwei Lötpunkten (53), die zwei Anschlüsse des Fotoempfängers oder Fotoemitters (52) bilden, auf den Träger (4) gelötet ist.

4. Verbindungsvorrichtung nach einem der Ansprüche 1-3, dadurch gekennzeichnet, daß die mechanischen Befestigungen (44) Vorsprünge (440), die die Kante des Trägers (4) umgreifen und vorzugsweise an metallischen Plättchen (45) des Trägers (4) angelötet sind und andere Vorsprünge (441), die auf die Kanten (33) der Nut (32) des Sockels (3) gelötet und/oder geklebt und/oder mittels Schrauben (46a) befestigt sind, aufweisen.

5. Verbindungsvorrichtung nach einem der Ansprüche 1-4, dadurch gekennzeichnet, daß die Kante des Trägers (4) auf der gegenüberliegenden Seite des Fotoelements (5) und des weiblichen Elements (1) elektrische Verbindungsstifte (42) mit Enden (421), die metallische Plättchen (43) auf dieser Kante umgreifen und bevorzugt mit diesen verlötet sind, und andere Enden (420), die an der Kante des Trägers (4) vorstehen, aufweist.

6. Verbindungsvorrichtung nach Anspruch 4 und 5, dadurch gekennzeichnet, daß sie mehrere parallele Träger (4a, 4i, 4s) aus gedruckten und/oder Mehrschichtkarten aufweist, die diskrete und/oder integrierte elektronische Komponenten tragen, mit mechanischen Verbindungen (44a, 44i, 44s) auf dem Sockel (3a) befestigt sind und elektrische Verbindungsstifte (42a, 42i, 42s) aufweisen.

7. Verbindungsvorrichtung nach einem der Ansprüche 1-6, dadurch gekennzeichnet, daß die elektronischen Komponenten, die auf einem Träger angeordnet sind (4; 4a; 4i; 4s), von einem Deckel, der luftdicht auf dem Träger befestigt ist, abgedeckt sind.

8. Verbindungsvorrichtung nach einem der Ansprüche 1-7, dadurch gekennzeichnet, daß er einen Deckel (6; 6s) aufweist, der die Oberfläche des Sockels (3; 3a) oberhalb mindestens des Trägers (4, 4a), der das Fotoelement (5) aufweist, abdeckt und vorzugsweise mit Schrauben (61, 61s) am Sockel (3; 3a) und vorzugsweise anstoßend an eine Seite (15) des weiblichen Elements (1) gegenüber dem Fotoelement (5) befestigt ist.

9. Verbindungsvorrichtung nach Anspruch 6 und 8, dadurch gekennzeichnet, daß er einen zweiten Deckel (4i) aufweist, der eine andere Oberfläche des Sockels (3a) unterhalb mindestens eines der parallelen Träger (4i) abdeckt und am Sockel (3a) vorzugsweise mittels Schrauben (61i) und vorzugsweise anstoßend an eine Seite (15) des weiblichen Elements (1) gegenüber dem Fotoelement (5) befestigt ist.

10. Verbindungsvorrichtung nach Anspruch 5 oder 6 und einem der Ansprüche 7 bis 9, dadurch gekennzeichnet, daß die anderen Enden (420) der Stifte (42; 42a, 42i, 42s) frei eine oder mehrere Öffnungen des oder der Deckel (6; 6i, 6s) durchstoßen.

11. Verbindungsvorrichtung nach Anspruch 5 oder 6 und einem der Ansprüche 7 bis 9, dadurch gekennzeichnet, daß die Stifte (42; 41a, 42i, 42s) einen isolierenden elektrischen Flansch (7), der am Sockel (3; 3a) befestigt ist, durchstoßen.

12. Verbindungsvorrichtung nach einem der Ansprüche 1-12, dadurch gekennzeichnet, daß der Sockel (3; 3a) auf einer Seite (15) des weiblichen Elements (1) vorzugsweise senkrecht zur Referenzachse (X'X) und genau koplanar zur Stirnfläche der Faser (F) mit Schrauben (18; 38) und/oder durch Löten befestigt ist.

13. Verfahren zur Einstellung des Fotoelements in der Eigenschaft als Fotoempfänger (5) beim Verbinden mit der Stirnseite der optischen Faser (F) in der Verbindungsvorrichtung entsprechend einem der Ansprüche 1 bis 12, dadurch gekennzeichnet, daß

    a) das weibliche Element (1 ) koaxial zur Referenzachse (X'X) auf dem Sockel (3) befestigt ist,

    b) das männliche Element (2), das das Endstück der optischen Faser (F) enthält, mit dem weiblichen Element verbunden wird,

    c) der Träger (4), der den Fotoempfänger (5) trägt, optisch oberhalb des Trägers (3) mit Hilfe eines Mikromanipulators so eingestellt wird, daß der Fotoempfänger (5) genau koaxial zur Referenzachse (X'X) und einige hundertstel Millimeter von der Stirnseite der optischen Faser (F) entfernt zu liegen kommt,

    d) ein optisches Signal in die optische Faser (F) eingespeist und vom Fotoempfänger in ein elektrisches Signal gewandelt wird, und der Träger (4) im dreidimensionalen Raum mit Hilfe des Mikromanipulators verschoben wird, bis das elektrische Signal eine maximale Energie entsprechend einer optimalen Lage des Fotoempfängers (5) und des Trägers (4) aufweist, und

    e) der Träger (4) in der optimalen Lage auf dem Sockel (3) befestigt wird.

14. Verfahren zur Einstellung der Stirnseite der optischen Faser (F) beim Verbinden mit dem Fotoelement in der Eigenschaft als Fotoempfänger (5) in der Verbindungsvorrichtung nach einem der Ansprüche 1 bis 12, dadurch gekennzeichnet, daß

    a) der Träger (4a), der den Fotoempfänger (5) trägt, optisch oberhalb des Sockels (3a) mit Hilfe eines Mikromanipulators so eingestellt wird, daß der Fotoempfänger (5) genau koaxial zur Referenzachse (X'X) zu liegen kommt, und daß eine Seite (51) des Fotoempfängers (5) gegen eine Lehre (calibre) quer zur Referenzachse (X'X) stößt,

    b) der Träger (4a) auf dem Sockel (3a) befestigt wird und die Lehre (calibre) weggezogen wird,

    c) das weibliche Element (1) mit dem männlichen Element (2), das das Endstück der optischen Faser (F) enthält, verbunden wird,

d) eine Seite (10) des weiblichen Elements (1) gegen eine Seite (37) des Sockels (3a) senkrecht zur Referenzachse (X'X) mit Hilfe des Mikromanipulators so angeordnet wird, daß die Stirnseite der Faser (F) einige hundertstel Millimeter von der Seite (51) des Fotoempfängers (5) entfernt ist,

e) ein optisches Signal in die optische Faser (F) eingespeist und vom Fotoempfänger (5) in ein elektrisches Signal gewandelt wird, und das weibliche Element (1) senkrecht zur Referenzachse (X'X) verschoben wird, bis das elektrische Signal eine maximale Energie entsprechend einer optimalen Lage des weiblichen Elements (1) und der Stirnseite der optischen Faser aufweist, und

f) die Seite (10) des weiblichen Elements (1) in der optimalen Lage auf der Fläche (37) des Sockels (3a) befestigt wird.

15. Verfahren zur Einstellung des Fotoelements in der Eigenschaft als Fotoemitter (5) beim Verbinden mit der Stirnseite der optischen Faser (F) in der Verbindungsvorrichtung nach einem der Ansprüche 1 bis 12, dadurch gekennzeichnet, daß

a) das weibliche Element (1) koaxial zur Referenzachse X'X auf dem Sockel (3) befestigt wird,

b) das männliche Element (2), das das Endstück der optischen Faser (F) enthält, mit dem weiblichen Element verbunden wird,

c) der Träger (4), der den Fotoemitter (5) trägt, optisch oberhalb des Sockels (3) mit Hilfe eines Mikromanipulators so eingestellt wird, daß der Fotoemitter (5) genau koaxial zur Referenzachse (X'X) und einige hundertstel Millimeter von der Stirnseite der optischen Faser (F) entfernt zu liegen kommt,

d) ein elektrisches Signal auf die Anschlüsse des Fotoemitters (5) gegeben und vom Fotoemitter in ein optisches Signal gewandelt wird, das die optische Faser (F) durchquert, und der Träger (4) im dreidimensionalen Raum mit Hilfe des Mikromanipulators verschoben wird, bis das optische Signal, das die Faser verläßt, eine maximale Energie entsprechend einer optimalen Lage des Fotoemitters (5) und des Trägers (4) aufweist, und

e) der Träger (4) in der optimalen Lage auf dem Sockel (3) befestigt wird.

16. Verfahren zur Einstellung der Stirnseite der optischen Faser (F) beim Verbinden mit dem Fotoelement in der Eigenschaft als Fotoemitter (5) in der Verbindungsvorrichtung nach einem der Ansprüche 1 bis 12, dadurch gekennzeichnet, daß

a) der Träger (4a), der den Fotoemitter (5) trägt, optisch oberhalb des Sockels (3a) mit Hilfe des Mikromanipulators so eingestellt wird, daß der Fotoemitter (5) genau koaxial zur Referenzachse (X'X) zu liegen kommt und daß eine Seite (51) des Fotoemitters (5) gegen eine Lehre (calibre) quer zur Referenzachse (X'X) stößt,

b) der Träger (4a) auf dem Sockel (3a) befestigt wird und die Lehre (calibre) weggezogen wird,

c) das weibliche Element (1) mit dem männlichen Element (2), das das Endstück der optischen Faser (F) enthält, verbunden wird,

d) eine Seite (10) des weiblichen Elements (1) gegen eine Seite (37) des Sockels (3a) senkrecht zur Referenzachse (X'X) mit Hilfe des Mikromanipulators so angelegt wird, daß die Stirnseite der Faser (F) einige hundertstel Millimeter von der Fläche (51) des Fotoemitters (5) entfernt ist,

e) ein elektrisches Signal auf die Anschlüsse des Fotoemitters (5) gegeben und vom Fotoemitter (5) in ein optisches Signal, das die optische Faser (F) durchquert, gewandelt wird, und das weibliche Element (1) senkrecht zur Referenzachse (X'X) verschoben wird, bis das optische Signal, das die Faser verläßt, eine maximale Energie entsprechend einer optimalen Lage des weiblichen Elements (1) und der Stirnseite der optischen Faser aufweist, und

f) die Seite (10) des weiblichen Elements (1) in der optimalen Lage auf der Seite (37) des Sockels (3a) befestigt wird.

17. Verfahren nach Anspruch 14 oder 16, dadurch gekennzeichnet, daß die Befestigung der Seite (10) des weiblichen Elements (1) an der Seite (37) des Sockels (3a) mit Hilfe von Schrauben (38) erfolgt, die frei glatte Bohrungen (370) in einer (37) der Seiten durchstoßen und in Gewindebohrungen (19) der anderen Seite (10) verschraubt sind, wobei die glatten Bohrungen (370) einen größeren Durchmesser als die Gewindebohrungen (38) aufweisen.

FIG.1

FIG. 2

# FIG.3

EP 0 158 561 B1

FIG.8

FIG.6

FIG.13

FIG.4

EP 0 158 561 B1

FIG. 5

FIG.9

FIG.7

44b
44i
4a
4b
4i
371
5
370
6b
44a
6i
60b
60i

10
370
19
38
48
371
F
15
5
2
1
37
38
4a
60i
46a
44a
42a
70a
7
IV
IV
33a
71

46b
33a
46a
60i
10
38
44b
44a
7
2
1
371
46b
42b
F
4a
5
X'
X

EP 0 158 561 B1

18

## FIG.12

## FIG.11

## FIG.10

EP 0 158 561 B1